# EUROPEAN PATENT SPECIFICATION

(11) **EP 2 579 408 B1**
(45) Date of publication and mention of the grant of the patent: **09.12.2015**
(21) Application number: 12187278.2
(22) Date of filing: 04.10.2012
(51) Int. Cl.: H02G 3/08, H05K 7/02

(54) **Electric connection box**
Elektrischer Anschlusskasten
Coffret de connexion électrique

(30) Priority: 07.10.2011 JP 2011222507
(43) Date of publication of application: 10.04.2013
(73) Proprietor: Sumitomo Wiring Systems, Ltd., Yokkaichi-city, Mie 510-8503 (JP)
(72) Inventor: Yoshida, Ryohei, Yokkaichi-city, Mie 510-8503 (JP); Shimada, Yoshihisa, Yokkaichi-city, Mie 510-8503 (JP)
(74) Representative: Winter, Brandl, Fürniss, Hübner, Röss, Kaiser, Polte - Partnerschaft mbB

(56) References cited:
- EP-A1- 1 571 744
- EP-A2- 2 355 259
- WO-A1-2008/023102
- DE-A1-102009 046 019
- US-A1- 2009 269 951
- US-B1- 6 560 840

## Description

The present invention relates to an electric connection box installed to an automobile or the like, and more particularly, to an electric connection box including a hollow case formed by fitting one case and an other case together and an internal circuit body housed within the hollow case.

An electric connection box in the related art adopts a configuration in which a hollow case is formed by fitting one case and an other case, such as an upper case and a lower case, to each other on the sides of opening portions and an internal circuit body formed of bus bars and the like is housed within the hollow case. By inserting connection terminals provided to the internal circuit body into terminal insertion holes provided so as to penetrate through the hollow case, fuses to be connected to the connection terminals, a connector connected to an end portion of an outside electric wire, and the like are connected to the internal circuit body.

Incidentally, with the electric connection box as above, it is necessary to form the hollow case by fitting the other case to the one case while the internal circuit body is housed in the one case. Hence, when the one case and the other case are fit together, it is crucial that the one case and the other case are positioned precisely with respect to each other. To this end, there has been proposed a structure in which, as are shown in Fig. 2, Fig. 3, Fig. 10, and Fig. 12 of JP-A-2010-110060, a positioning boss protruding toward the other case is provided so as to protrude in an interior of the one case and a positioning recess opening toward the one case is provided so as to protrude in an interior of the other case. When configured in this manner, the other case is positioned pre-recess. Accordingly, connection terminals of the internal circuit housed in the one case are precisely guided to and inserted into the terminal insertion holes provided so as to penetrate through the other case. It thus becomes possible to smoothly fit the one case and the other case together.

However, in the structure in the related art described in JP-A-2010-110060, it is necessary to provide a tube body forming the positioning recess so as to protrude in an interior of the other case. Hence, the electric connection box naturally increases in thickness and size comparable to a height of the tube portion. Accordingly, it becomes difficult to adopt this structure in a case where there is a stringent demand on compactness for an electric connection box.

Also, the positioning recess is provided to the interior of the other case. Hence, it is difficult for an operator to confirm the location of the positioning recess during an assembling work. Accordingly, there is a problem that a work to position the positioning recess with respect to the positioning boss is by no means easy and takes a time. In a case where the worker fails to fit the positioning boss into the positioning recess successfully, the connection terminals cannot be inserted into the terminal insertion holes and there is a risk that the connection terminals abut on the other case and become deformed.

The invention was devised in view of the foregoing circumstances and has an object to provide an electric connection box of a novel structure facilitating a work to position a positioning boss provided to one case with respect to a positioning recess provided to the other case while achieving a more compact size.

According to a first aspect of the invention, an electric connection box is configured in such a manner that an internal circuit body is housed within a hollow case formed by fitting one case and an other case together and the one case is positioned with respect to the other case by means of at least one positioning boss provided to an interior of the one case, which is fit into a positioning recess provided to an interior of the other case so that a connection terminal provided to the internal circuit body is inserted into a terminal insertion hole provided so as to penetrate through the hollow case. The electric connection box is characterized in that a tube body defining the positioning recess is provided so as to protrude on an outer surface of the other case.

In the electric connection box of the structure according to the invention, the tube body defining the positioning recess in which the positioning boss provided to the one case is fit is provided so as to protrude on the outer surface of the other case. Consequently, the tube body is visibly recognizable from the outer surface of the other case. Accordingly, a worker who fits the one case and the other case together becomes able to find a location at which the positioning recess is provided from the outer surface of the other case easily in a reliable manner and therefore becomes able to perform a work to position the positioning boss with respect to the positioning recess easily in a reliable manner. It thus becomes possible to enhance and stabilize workability in assembling the electric connection box.

Moreover, by providing the tube body defining the positioning recess so as to protrude on the outer surface of the other case, a protrusion dimension of the tube body can be secured on the outside of the case. Consequently, in comparison with the structure in the related art in which the tube body defining the positioning recess is provided so as to protrude in the interior of the case, it becomes possible to lessen an increase in thickness and size of the other case and hence of the electric connection box. The electric connection box can be therefore more compact. In particular, electrical component attachment portions, such as fuse attachment portions and connector attachment portions, are provided so as to protrude on the outer surface of the electric connection box. Hence, by setting the protrusion height of the tube potion to fall within a protrusion height of these electrical component attachment portions, it becomes possible to provide the positioning recess without increasing the electric connection box in thickness and size. Hence, it becomes possible to increase a degree of freedom in design.

Preferably, the electric connection box according to the present invention is configured in such a manner that the positioning boss and the positioning recess are provided in two places spaced apart from each other, and that an outer shape of the tube body defining the positioning recess in one place and an outer shape of the tube body defining the positioning recess in the other place are different from each other.

According to this aspect, because the outer shapes of the tube bodies provided in the two places of the other case are different from each other, it becomes possible to distinguish between the two tube bodies and use the tube bodies as a guiding mark of a direction in which the other case is fit to the one case. Hence, for example, in a case where the other case has an assembling orientation but is also of substantially a left-right and top-bottom symmetrical outer shape, by providing mutually different outer shapes to the tube portions provided in two places spaced apart from each other, it becomes possible to provide the tube portions to also serve as a guiding mark of the assembling direction.

Preferably, the electric connection box according to the present invention is furthermore configured in such a manner that the one case and the other case are fit together by inserting a circumferential wall of the other case on an outer peripheral side of a circumferential wall of the one case to overlap each other; the internal circuit body is housed in the interior of the one case; and the positioning boss protrudes from a tip end portion of the circumferential wall of the one case toward the other case with a protrusion height higher than a protrusion height of the connection terminal.

In the invention, the tube body defining the positioning recess is provided so as to protrude on the outer surface of the other case. Consequently, it becomes possible to provide the positioning boss to the one case to protrude in such a manner that a protrusion height from a tip end portion of the circumferential wall is set higher than the protrusion height of the connection terminal. Hence, it becomes possible to form a guiding mechanism that prevents the connection terminal from coming into the other case during a work to fit the one case and the other case together using the positioning boss. Hence, the connection terminal can be protected further advantageously. More specifically, as is shown in Fig. 12 of JP-A-2010-110060, in the case of the structure in the related art in which the tube body is provided so as to protrude in the interior of the other case, a protrusion height of the connection terminal from the tip end portion of the circumferential wall of the one case becomes higher than the protrusion height of the positioning boss. Accordingly, there is a possibility that the connection terminal is damaged by accidentally coming into contact with the other case during an assembling work. In contrast, according to this aspect, the positioning boss is fit into the positioning recess and the one case and the other case are positioned with respect to each other before the connection terminal is inserted into the terminal insertion hole of the other case. Consequently, because the connection terminal can be inserted into the terminal insertion hole of the other case while the former and the latter are positioned with respect to each other, it becomes possible to forestall the connection terminal from accidentally coming into contact with the other case.

In the invention, the tube body defining the positioning recess in which the positioning boss provided to the one case in the form of a protrusion is fit is provided so as to protrude on the outer surface of the other case. Hence, it becomes possible to find the location of the positioning recess from the outside of the other case easily using the tube body as a guiding mark. It thus becomes possible to perform a work to position the positioning boss with respect to the positioning recess easily. Further, by securing a protrusion dimension of the tube body on the outside of the other case, it becomes possible to avoid an increase in thickness and size of the other case and hence of the electric connection box in comparison with a case where the protrusion dimension of the tube body is secured in the interior of the other case. The electric connection box can therefore become more compact.

The invention now will be more fully described by means of an illustrative but not limiting embodiment thereof in conjunction with the accompanying drawings, in which:
Fig. 1 is an exploded perspective view of an electric connection box according to one embodiment of the invention;
Fig. 2 is a bottom view of a lower case;
Fig. 3 is a plan view of the lower case;
Fig. 4 is a side view of the lower case;
Fig. 5(a) is an enlarged view of a first positioning recess and Fig. 5(b) is a cross section taken along the line Vb-Vb of Fig. 5(a);
Fig. 6(a) is an enlarged view of a second positioning recess and Fig. 6(b) is a cross section taken along the line Vlb-Vlb of Fig. 6(a);
Fig. 7 is a bottom view of an upper case;
Fig. 8 is a side view of the upper case;
Fig. 9 is an enlarged view of a first positioning boss;
Fig. 10 is an enlarged view of a second positioning boss;
Fig. 11 is a cross section taken along the line XI-XI of Fig. 2 of the electric connection box shown in Fig. 1 in an assembled state; and
Fig. 12(a) is a view used to describe a fit-in state of the first positioning boss in the first positioning recess and Fig. 12(b) is a view used to describe a fit-in state of the second positioning boss in the second positioning recess.

Hereinafter, an embodiment of the invention will be described with reference to the drawings.

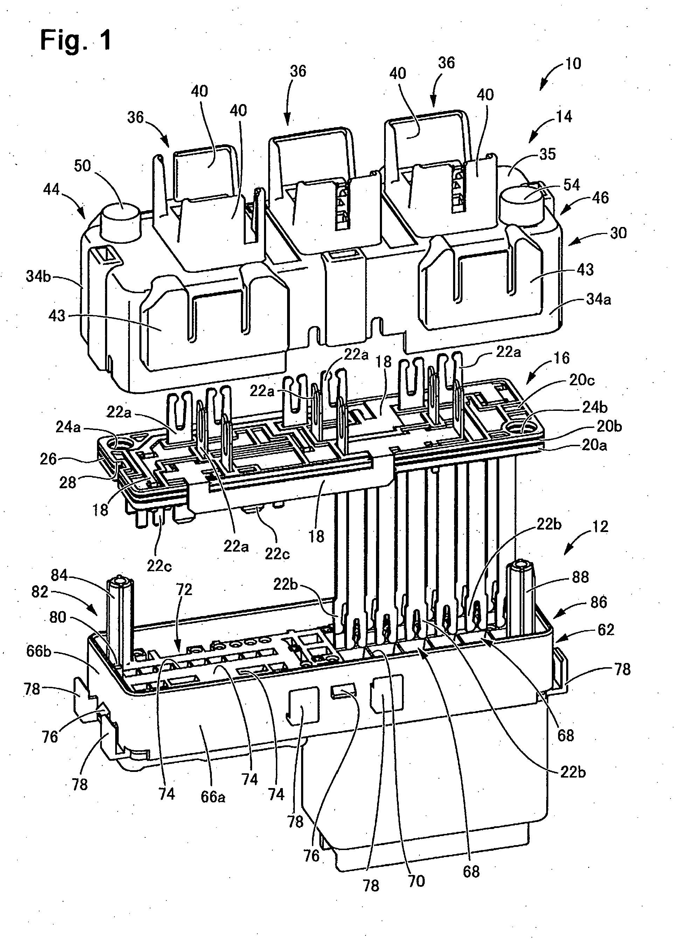

Firstly, Fig. 1 shows an electric connection box 10 as a possible embodiment of the invention. The electric connection box 10 is of a structure in which an upper case 12 as one case and a lower case 14 as an other case are fit to each other with a bus bar circuit 16 as an internal circuit body being housed within.

The bus bar circuit 16 is of a structure in which a plurality of bus bars 18 and a plurality of (herein, three) insulating plates 20a through 20c are laminated. As in the related art, connection terminals 22a of a so-called tuning fork shape formed of a pair of opposing insulation displacement blades to connect to unillustrated relays as electrical components, connection terminals 22b of substantially the same tuning fork shape as the connection terminals 22a to connect to unillustrated fuses as electrical components, connection terminals 22c of substantially a rectangular plate shape to connect to unillustrated connectors as electrical components, and the like are appropriately provided at end portions of the bus bars 18. The connection terminals 22a protrude toward the lower case 14 (upward in Fig. 1) in a lamination direction of the laminated insulating plates 20a through 20c whereas the connection terminals 22b and 22c protrude toward the upper case 12 (downward in Fig. 1) in the lamination direction of the insulating plates 20a through 20c. A protrusion dimension of the connection terminals 22b from the insulating plates 20a through 20c is greater than a protrusion dimension of the connection terminals 22c protruding in the same direction.

The respective insulating plates 20a through 20c are of substantially a longitudinal rectangular plate shape all in equal size. Each of the insulating plates 20a through 20c is provided with a first insertion hole 24a and a second insertion hole 24b penetrating through the plate in a pair of diagonally located corners. The first insertion hole 24a and the second insertion hole 24b are of substantially the same shapes, respectively, as a first positioning recess 45 and a second positioning recess 48 described below. When the respective insulating plates 20a through 20c are laminated one on another, the first through holes 24a and the second through-holes 24b provided to the respective insulating plates 20a through 20c coincide with one another and thereby form through-holes penetrating through the insulating plates 20a through 20c in the lamination direction. Further, the respective insulating plates 20a through 20c are provided with positioning notches 28 at substantially center portions of edge portions 26 forming short sides all on the same side. As the positioning notches 28 of the respective insulating plates 20a through 20c are brought into coincidence with one another, a notch penetrating through the insulating plates 20a through 20c in the lamination direction is formed.

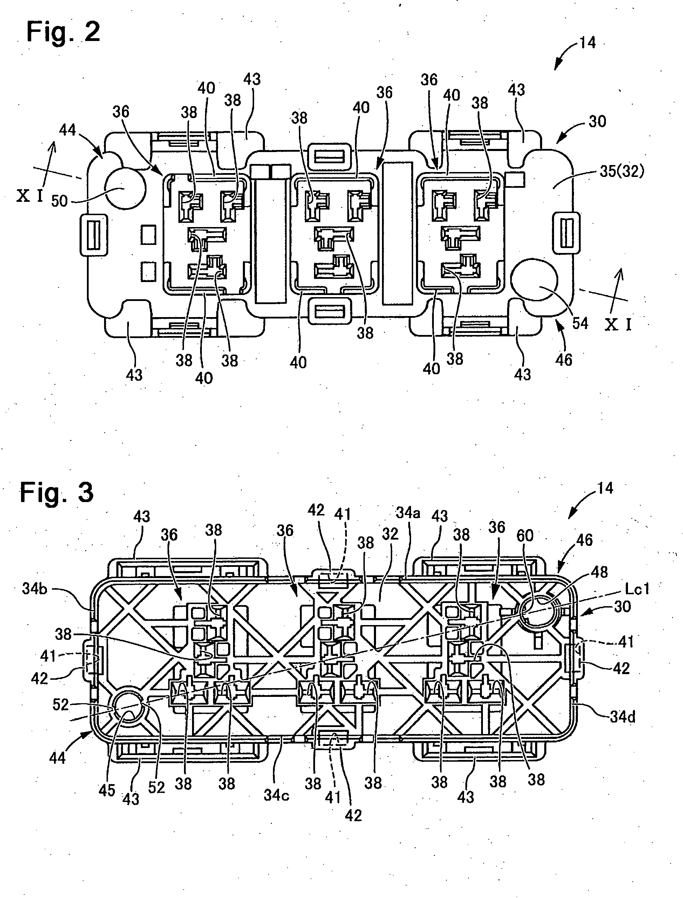

Fig. 2 through Fig. 4 show the lower case 14. The lower case 14 is a single-piece article made of synthetic resin. The lower case 14 is provided with a case main body 30 of substantially a longitudinal rectangular box shape opening toward the upper case 12. The case main body 30 is formed of a bottom plate 32 of substantially a longitudinal rectangular shape and a circumferential wall 34 protruding toward the upper case 12 from an outer peripheral edge portion of the bottom plate 32. Consequently, when viewed in a direction in which the lower case 14 is fit to the upper case 12 (see Fig. 2), the lower case 14 as a whole is of substantially a rotationally symmetric longitudinal rectangular shape. In addition, a surface of the bottom plate 32 on the outside of the case main body 30 forms an outer surface 35 of the lower case 14.

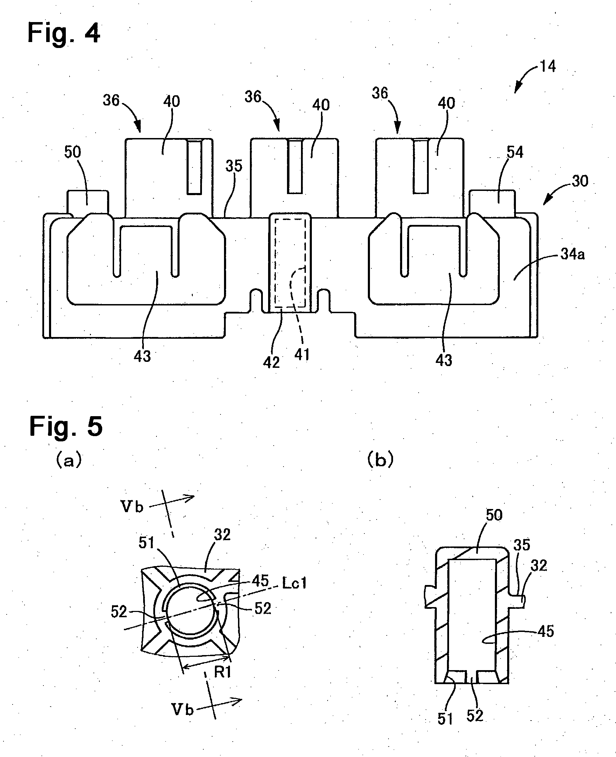

The lower case 14 is provided with a plurality of (herein, three) relay attachment portions 36 aligned side by side in a longitudinal direction (left-right direction in Fig. 2). In each relay attachment portion 36, terminal insertion holes 38 in which the connection terminals 22a of the bus bars 18 are inserted are provided so as to penetrate through the bottom plate 32. Each relay attachment portion 36 is formed so as to protrude outward (upward in Fig. 4) on the outside of the case main body 30 from the bottom plate 32. Each relay attachment portion 36 is provided with a pair of opposing protection wall portions 40 and 40 each protruding outward on the outside of the case main body 30 from the bottom plate 32.

Also, as are shown in Fig. 3 and Fig. 4, the circumferential wall 34 of a longitudinal rectangular shape is formed of circumferential walls 34a and 34c forming long sides and circumferential walls 34b and 34d forming short sides. An engaging recess 41 that becomes concave inward on the inside of the case main body 30 is provided at a center portion of an inner surface of each circumferential wall. Consequently, a locking portion 42 protruding inward on the inside of the case main body 30 from the engaging recess 41 is formed relatively in an outer peripheral portion of the engaging recess 41 on the side of the upper case 12. Further, a pair of locking portions 43 and 43 are provided on the outer surfaces of the circumferential walls 34a and 34c on the both sides having the engaging recess 41 in between. Owing to these locking portions 43 and 43, it becomes possible to fix the electric connection box 10 to unillustrated another electric connection box, an unillustrated vehicle body panel or the like.

As is shown in Fig. 3, in the interior of the lower case 14, the first positioning recess 45 as a positioning recess is formed in a first corner portion 44, which is one of corners opposing in a direction of a diagonal line Lc1 on the bottom plate 32 of substantially a longitudinal rectangular shape, and the second positioning recess 48 as a positioning recess is formed in a second corner portion 46, which is the other corner. As is also shown in Fig. 5, the first positioning recess 45 is defined by a center hole of a first tube body 50 as a tube body of a bottomed cylindrical shape opening toward the upper case 12 (lower side in Fig. 5B) and formed in the first corner portion 44 of the bottom plate plate 32. The first positioning recess 45 is of a concave shape extending in a direction in which the lower case 14 and the upper case 12 are fit together (top-bottom direction in Fig. 5B) in substantially a true circular shape in cross section.

In an opening edge portion of the first positioning recess 45 on the side of the upper case 12, a taper portion 51 expanding toward the upper case 12 is formed continuously along substantially the entire circumference except for inner protrusions 52 and 52 described below. Further, a pair of the inner protrusions 52 and 52 protruding inward on the inside of the first positioning recess 45 are provided to the opening edge portion of the first positioning recess 45 on the side of the upper case 12. The inner protrusions 52 and 52 are located oppositely in the diagonal direction Lc1 of the bottom plate 32 and formed in a protruding shape in the opening edge portion of the first positioning recess 45 where the taper portion 51 is provided. Consequently, an inside dimension R1 of the first positioning recess 45 in the direction of the diagonal line Lc1 is defined by a spacing distance between the inner protrusions 52 and 52 in the direction of the diagonal line Lc1. The spacing distance between the inner protrusions 52 and 52 is equal to a diameter dimension (dimension in the left-right direction in Fig. 5B) of the first positioning recess 45 in a portion where the taper portion 51 is not formed and therefore not expanded in diameter by the taper portion 51.

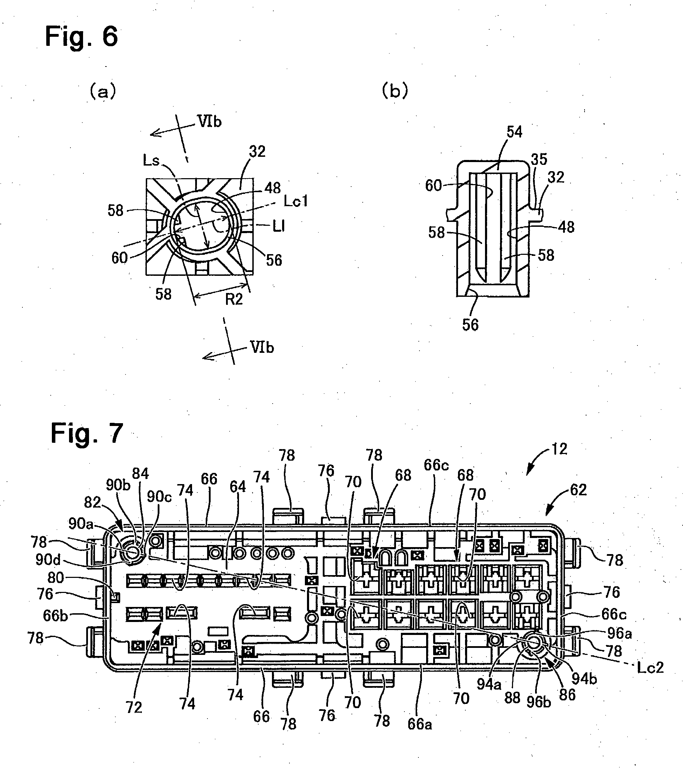

Meanwhile, as is also shown in Fig. 6, the second positioning recess 48 is defined by a center hole of a second tube body 54 as a tube body of a bottomed tube shape opening toward the upper case 12 (lower end in Fig. 6(b)) and provided in a second corner portion 46 (see Fig. 3) oppositely to the first tube portion 50 in the direction of the diagonal line Lc1 of the bottom plate 32. The second positioning recess 48 is of a concave shape extending in a direction in which the lower case 14 and the upper case 12 are fit together (top-bottom direction in Fig. 6(b)) in substantially an elliptical shape in cross section having a long axis LI and a short axis Ls. The long axis LI extends in the direction of the diagonal line Lc1. Consequently, an inside dimension R2 of the second positioning recess 48 in the direction of the diagonal line Lc1 is defined by the long axis LI and set larger than the inside dimension R1 of the first positioning recess 45 in the direction of the diagonal line Lc1.

In an opening edge portion of the second positioning recess 48 on the side of the upper case 12, a taper portion 56 expanding toward the upper case 12 is formed continuously along the entire circumference of the second positioning recess 48. Further, a pair of guide ribs 58 and 58 are provided on an inner peripheral surface of the second positioning recess 48 so as to protrude inward on the inside of the second positioning recess 48 and extend in an extending direction of the second positioning recess 48 (top-bottom direction in Fig. 6(b)). The guide ribs 58 and 58 are spaced apart in a circumferential direction of the second positioning recess 48. Consequently, a fitting recess groove 60 extending in the extending direction of the second positioning recess 48 is formed between the guide ribs 58 and 58. The fitting recess groove 60 is located on the side of the first corner portion 44 (lower left in Fig. 6(a)) on the long axis LI of the second positioning recess 48. Consequently, as is shown in Fig. 3, the fitting recess groove 60 and a pair of the inner protrusions 52 and 52 of the first positioning recess 45 are located in a straight line on the diagonal line Lc1.

The first tube body 50 and the second tube body 54 respectively forming the first positioning recess 45 and the second positioning recess 48 are provided, respectively, in the first corner portion 44 and the second corner portion 46 located in opposing corners of the bottom plate 32 of a longitudinal rectangular shape and therefore spaced apart from each other. The first tube body 50 and the second tube body 54 are also provided so as to protrude outward (upward in Fig. 4) on the outside of the case main body 30 from the outer surface 35 of the bottom plate 32. Protrusion dimensions of the first positioning recess 45 and the second positioning recess 48 from the outer surface 35 are substantially equal to each other and set smaller than a protrusion dimension of the protecting wall portions 40 of the relay attachment portions 36. Also, as is shown in Fig. 2, the first tube body 50 corresponds to a shape of the first positioning recess 45 of substantially a true circular shape and is therefore of substantially a true circular shape when viewed in a direction in which the lower case 14 is fit to the upper case 12 (see Fig. 2). Meanwhile, the second tube body 54 corresponds to a shape of the second positioning recess 48 of substantially an elliptical shape and is therefore of substantially an elliptical shape when viewed in the direction in which the lower case 14 is fit to the upper case 12. In this manner, the first tube body 50 and the second tube body 54 have outer shapes different from each other when viewed in the direction in which the lower case 14 is fit to the upper case 12.

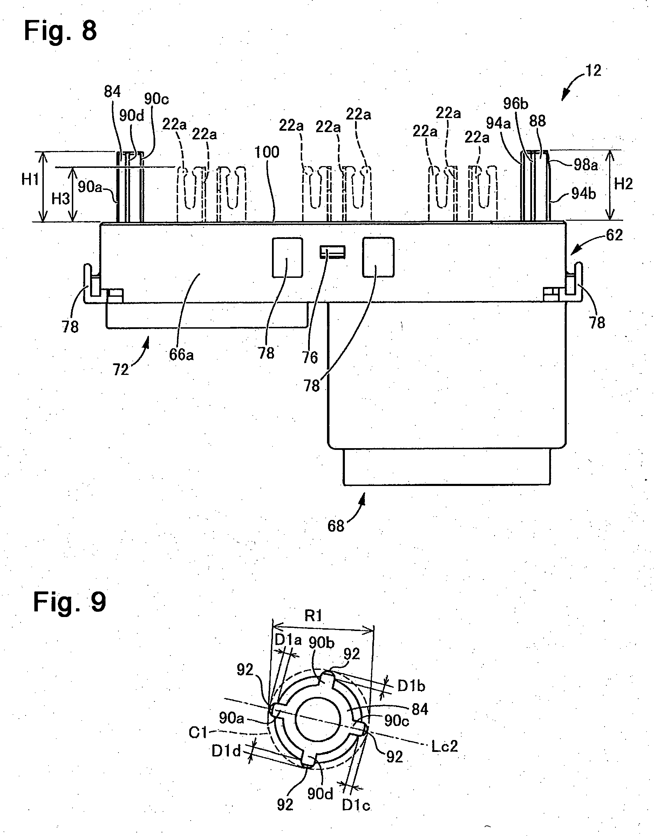

Fig. 7 and Fig. 8 show the upper case 12. The upper case 12 is a single-piece article made of synthetic resin. The upper case 12 is provided with a case main body 62 of substantially a longitudinal rectangular box shape opening toward the lower case 14 (upper side in Fig. 8). The case main body 62 is formed of a top plate 64 of substantially a longitudinal rectangular shape and a circumferential wall 66 protruding toward the lower case 14 from an outer peripheral edge portion of the top plate 64. Consequently, when viewed in the direction in which the upper case 12 is fit to the lower case 14 (see Fig. 7), the upper case 12 as a whole is of substantially a rotational symmetric longitudinal rectangular shape. The top plate 64 of the upper case 12 is formed slightly smaller than the bottom plate 32 of the lower case 14 so that the circumferential wall 66 of the upper case 12 is internally inserted into the circumferential wall 34 of the lower case 14.

The top plate 64 of the upper case 12 is provided with a plurality of (herein, six) fuse attachment portions 68 aligned side by side in a longitudinal direction (left-right direction in Fig. 7). In each fuse attachment portion 68, a pair of terminal insertion holes 70 and 70 in which a pair of the connection terminals 22b and 22b of the bus bars 18 are inserted are provided so as to penetrate through the top plate 64 and oppositely. Also, the top plate 64 is provided with a single connector attachment portion 72 adjacently to a plurality of the fuse attachment portions 68 in the longitudinal direction of the top plate 64. In the connector attachment portion 72, a plurality of terminal insertion holes 74 in which a plurality of the connection terminals 22c of the bus bars 18 are inserted are provided so as to penetrate through the top plate 64. The terminal insertion holes 74 are aligned in two rows in the longitudinal direction of the top plate 64. The fuse attachment portions 68 of the electric connection box 10 of this embodiment considerably protrude outward (downward in Fig. 8) on the outside of the case main body 62 from the top plate 64.

Also, the circumferential wall 66 of a longitudinal rectangular shape is formed of circumferential walls 66a and 66c forming long sides and circumferential walls 66b and 66d forming short sides. A locking claw 76 is provided so as to protrude at a center of the outer surface of each circumferential wall. Also, a pair of pinching pieces 78 and 78 of a hook shape opening toward the lower case 14 are provided to each of the circumferential walls 66a through 66d on the both sides having the locking claw 76 in between. Further, a positioning protrusion 80 of a size matching the positioning notches 28 provided to the insulating plates 20a through 20c of the bus bar circuit 16 is provided on the inner surface of the circumferential wall 66b so as to protrude inward on the inside of the case main body 62.

In the interior of the upper case 12, a first positioning boss 84 as a positioning means is provided in a first corner portion 82 of the top plate 64 of substantially a longitudinal rectangular shape. The first corner portion 82 coincides with the first corner portion 44 of the lower case 14 (see Fig. 3) when the upper case 12 and the lower case 14 are fit together. Also, in the interior of the upper case 12, a second positioning boss 88 as a positioning means is provided in a second corner portion 86 opposing the first corner portion 82 in a direction of a diagonal line Lc2 of the top plate 64. The second corner portion 86 coincides with the second corner portion 46 of the lower case 14 when the upper case 12 and the lower case 14 are fit together. Consequently, the first positioning boss 84 and the second positioning boss 88 are provided to the top plate 64 at locations spaced apart from each other diagonally.

The first positioning boss 84 provided in the first corner portion 82 is of substantially a cylindrical shape protruding from the top plate 64 toward the lower case 14 (upper side in Fig. 8) while maintaining substantially a constant outside diameter dimension. As is shown in Fig. 9, a plurality of rattling preventing ribs 90 are provided on an outer peripheral surface of the first positioning boss 84. The rattling preventing ribs 90 are provided at regular intervals in a circumferential direction and so as to protrude radially outward on the outside of the first positioning boss 84. In this embodiment, four rattling preventing ribs 90a through 90d are provided in every 90° about a center axis of the first positioning boss 84. A pair of the rattling preventing ribs 90a and 90c are provided on the outside of the first positioning boss 84 on the both sides in a radial direction so as to protrude in the direction of the diagonal line Lc2. Protrusion dimensions D1a through D1d of the rattling preventing ribs 90a through 90d, respectively, from the outer peripheral surface of the first positioning boss 84 are all set to be equal. Protrusion tip edge portions of the rattling preventing ribs 90a through 90d from the outer peripheral surface of the first positioning boss 84 are set to a size allowing the protrusion tip edge portions to be inscribed in a circle C1 having a diameter of R1 and corresponding to a sectional shape of the first positioning recess 45. Consequently, the first positioning boss 84 extends from the top plate 64 in a cylindrical shape having an outside diameter smaller than the inside dimension R1 of the first positioning recess 45 in a portion where the rattling ribs 90a through 90d are not provided. In addition, the rattling preventing ribs 90a through 90d are provided substantially fully along the first positioning boss 84 in an extending direction (top-bottom direction in Fig. 8). As is shown in Fig. 9, a taper surface 92 is provided to each of the protrusion tip edge portions of the respective rattling preventing ribs 90a through 90d from the top plate 64. A protrusion dimension of the taper surface 92 from the outer peripheral surface of the first positioning boss 84 reduces gradually toward the tip end in the protruding direction (upward in Fig. 8). It thus becomes easy to insert the first positioning boss 84 into the first positioning recess 45.

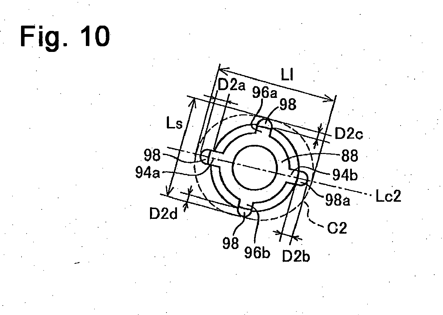

Meanwhile, the second positioning boss 88 provided in the second corner portion 86 protrudes toward the lower case 14 (upper side in Fig. 8) from the top plate 64 in substantially a cylindrical shape having an outside diameter dimension substantially equal to that of the first positioning boss 84. As is shown in Fig. 10, a pair of rib protrusions 94a and 94b and a pair of rattling preventing ribs 96a and 96b each protruding radially outward on the outside of the second positioning boss 88 are provided on an outer peripheral surface of the second positioning boss 88 at predetermined intervals in the circumferential direction. In this embodiment, the rib protrusions 94a and 94b and the rattling preventing ribs 96a and 96b are provided alternately in every 90° about a center axis of the second positioning boss 88. The rib protrusions 94a and 94b are provided on the outside of the second positioning boss 88 on the both sides in a radial direction so as to protrude in the direction of the diagonal line Lc2. Also, the rattling preventing ribs 96a and 96b are provided on the outside of the second positioning boss 88 on the both sides in a radial direction so as to protrude in a direction orthogonal to the diagonal line Lc2. Consequently, as is shown in Fig. 7, the rib protrusions 94a and 94b of the second positioning rib 88 and the rattling preventing ribs 90a and 90c of the first positioning boss 84 are provided in a straight line on the diagonal line Lc2. Protrusion dimensions D2a and D2b of the rib protrusions 94a and 94b, respectively, from the outer peripheral surface of the second positioning boss 88 are set to be equal to each other. Also, protrusion dimensions D2c and D2d of the rattling preventing ribs 96a and 96b, respectively, from the outer peripheral surface of the second positioning boss 88 are set to be equal to each other. The protrusion dimensions D2a and D2b of the rib protrusions 94a and 94b, respectively, are set larger than the protrusion dimensions D2c and D2d of the rattling preventing ribs 96a and 96b, respectively. Consequently, the protrusion tip edge portions of the rattling preventing ribs 96a and 96b are inscribed in an oval C2 having a long axis LI and a short axis Ls and corresponding to a sectional shape of the second positioning recess 48 in a direction of the short axis Ls. Meanwhile, the protrusion tip edge portions of the rib protrusions 94a and 94b are set to a size to be located on slightly inner side from the oval C2 in a direction of the long axis LI.

Also, the rib protrusions 94a and 94b and the rattling preventing ribs 96a and 96b are formed substantially fully along the second positioning boss 88 in an extending direction (top-bottom direction in Fig. 8). As is shown in Fig. 10, a taper surface 98 is provided to each of the protrusion tip edge portions of the respective rib protrusions 94a and 94b and rattling preventing ribs 96a and 96b from the top plate 64. A protrusion dimension of the taper surface 98 from the outer peripheral surface of the second positioning boss 88 reduces gradually toward the tip end in the protruding direction (upward in Fig. 8). It thus becomes easy to insert the second positioning boss 88 into the second positioning recess 48. In particular, the taper surface 98a of the rib protrusion 94b located on the outer side of the upper case 12 in the direction of the diagonal line Lc2 is formed longer than the other taper surfaces 98 of the rib protrusion 94a and the rattling preventing ribs 96a and 96b in the extending direction of the second positioning boss 88 (top-bottom direction in Fig. 8). Hence, this taper surface 98 starts to exert a guiding function on the second positioning recess 48 in an outer portion of the second positioning boss 88 in the direction of the diagonal line Lc2 in an early stage. It thus becomes possible to more effectively absorb a dimensional error between the upper case 12 and the lower case 14.

As is shown in Fig. 8, protrusion heights H1 and H2 of the first positioning boss 84 and the second positioning boss 88, respectively, from a tip end portion 100 of the circumferential wall 66 toward the lower case 14 (upper side in Fig. 8) are set to sizes equal to each other. In a state where the bus bar circuit 16 is housed in the upper case 12, the protrusion heights H1 and H2 of the first positioning boss 84 and the second positioning boss 88, respectively, are set higher than a protrusion height H3 of the connection terminals 22a of the bus bar circuit 16 from the tip end portion 100 toward the lower case 14.

When the electric connection box 10 as above is assembled, as is shown in Fig. 1, a plurality of the bus bars 18 and a plurality of the insulating plates 20a through 20c are laminated first to form the bus bar circuit 16. Subsequently, the upper case 12 is located vertically below the bus bar circuit 16. The connection terminals 22b and 22c protruding from the insulating plate 20a of the bus bar circuit 16 are inserted, respectively, into the terminal insertion holes 70 and 74 of the upper case 12. Also, the first positioning boss 84 and the second positioning boss 88 are inserted, respectively, into the first insertion holes 24a and the second insertion holes 24b of the insulating plates 20a through 20c. The insulating plates 20a through 20c are thus housed within the case main body 62 of the upper case 12. The insulating plates 20a through 20c can be positioned with accuracy within the case main body 62 as the positioning notches 28 and the positioning protrusion 80 of the upper case 12 are engaged with each other. Subsequently, the lower case 14 is placed on the upper case 12 from above in a vertical direction, so that the first positioning boss 84 of the upper case 12 is fit into the first positioning recess 45 of the lower case 14 while the second positioning boss 88 is fit into the second positioning recess 48. Hence, the lower case 14 is placed on the upper case 12. Consequently, the upper case 12 and the lower case 14 are fit together in such a manner that the circumferential wall 34 of the lower case 14 is inserted on the outer peripheral side of the circumferential wall 66 of the upper case 12 while the circumferential wall 34 of the lower case 14 is pinched between the pinching pieces 78 and the circumferential wall 66 of the upper case 12. Then, the locking claws 76 of the upper case 12 go into the engaging recesses 41 formed in the inner surface of the circumferential wall 34 of the lower case 14. Then, as the locking portions 42 on the outer peripheral side of the engaging recesses 41 and the locking claws 76 are engaged with each other, the upper case 12 and the lower case 14 are fit to each other in a locked state. The electric connection box 10 is thus formed.

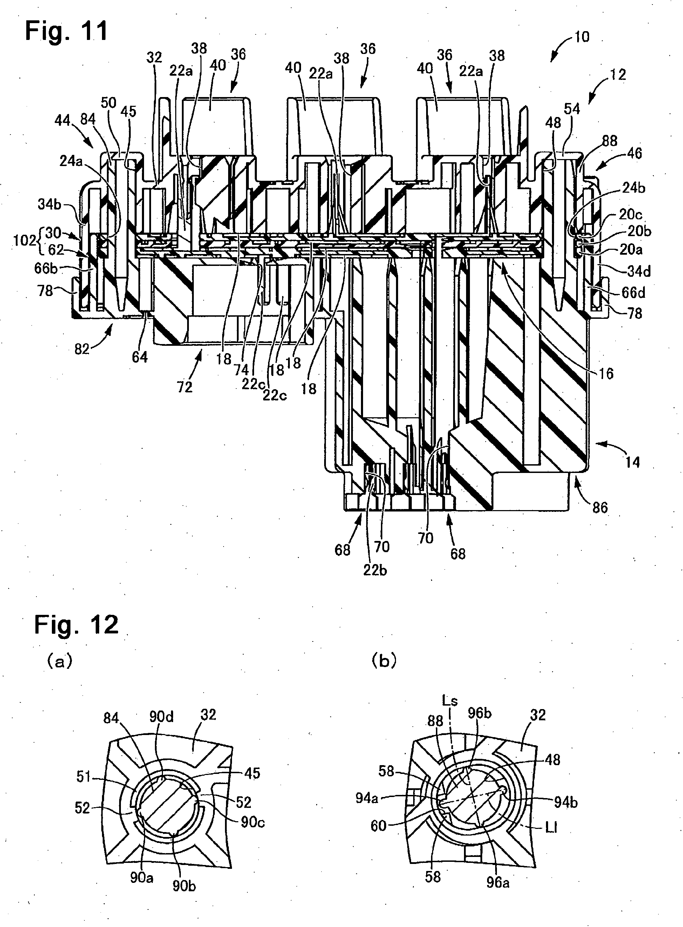

As is shown in Fig. 11, the hollow case 102 of a rectangular shape is formed by fitting the case main body 62 of the upper case 12 and the case main body 30 of the lower case 14 both of a longitudinal rectangular box shape to each other while the upper case 12 and the lower case 14 are fit to each other. The bus bar circuit 16 is housed in the interior of the hollow case 102 while the insulating plates 20a through 20c of the bus bar circuit 16 are sandwiched between the upper case 12 and the lower case 14. Consequently, the connection terminals 22a of the bus bar circuit 16 are inserted into the terminal insertion holes 38 of the relay attachment portions 36 to protrude into an outside space of the hollow case 102 while the connection terminals 22b and 22c are inserted, respectively, into the terminal insertion holes 70 of the fuse attachment portions 68 and the terminal insertion holes 74 of the connector attachment portion 72 to protrude into the outside space of the hollow case 102.

Also, as is shown in Fig. 12(a), the first positioning boss 84 is inserted into the first positioning recess 45 in such a manner that there is substantially no clearance between the four rattling preventing ribs 94a through 90d and the inner peripheral surface of the first positioning recess 45. Meanwhile, as is shown in Fig. 12(b), the second positioning boss 88 is positioned in the circumferential direction by the rib protrusions 94a and 94b as the rib protrusion 94a located on the inner side of the hollow case 102 in the direction of the diagonal line Lc2 (see Fig. 7) is fit into the fitting recess groove 60. Then, the rattling preventing ribs 96a and 96b are located in the direction of the short axis Ls of the second positioning recess 48. Hence, the second positioning boss 88 is inserted into the second positioning recess 48 in such a manner that there is substantially no clearance between the rattling preventing ribs 96a and 96b and the inner peripheral surface of the second positioning recess 48. On the other hand, the rib protrusion 94a and 94b are located in the direction of the long axis LI of the second positioning recess 48, which is the direction of the diagonal line Lc2. Hence, the second positioning boss 88 is inserted into the second positioning recess 48 in such a manner that there is a slight clearance between the rib protrusions 94a and 94b and the inner peripheral surface of the second positioning recess 48.

In the electric connection box 10 of the structure according to the embodiment, the first tube body 50 and the second tube body 54 defining the first positioning recess 45 and the second positioning recess 48, respectively, of the lower case 14 protrude on the outer surface 35 of the lower case 14 and are therefore visually recognizable from the outside of the lower case 14. Consequently, when the lower case 14 is fit to the upper case 12, it becomes possible to find the locations of the first positioning recess 45 and the second positioning recess 48 easily using the first tube body 50 and the second tube body 54 as guiding marks. Accordingly, it becomes possible to easily perform a work to insert the first positioning boss 84 and the second positioning boss 88 of the upper case 12 into the first positioning recess 45 and the second positioning recess 48, respectively. Further, when viewed in a direction in which the lower case 14 is fit to the upper case 12 (see Fig. 2), the first tube body 50 is of substantially a true circular shape whereas the second tube body 54 is of substantially an oval shape. That is, the outer shapes are different from each other. Hence, as in the embodiment, even in a case where the upper case 12 and the lower case 14 are of substantially a longitudinal rectangular shape when viewed in a direction in which the upper case 12 and the lower case 14 are fit together and each remains in substantially the same shape in a 180°-rotated state, it becomes possible to easily find an assembling direction on the basis of the locations of the first tube body 50 and the second tube body 54 by distinguishing between the first tube body 50 and the second tube body 54.

Also, because the first tube body 50 and the second tube body 54 are provided so as to protrude on the outer surface 35 of the lower case 14, a protrusion dimension of the first tube body 50 and the second tube body 54 can be secured on the outside of the lower case 14. Hence, because the lower case 14 can be more compact in top-bottom dimension, it becomes possible to reduce a size of the electric connection box 10. In particular, in this embodiment, the protrusion height of the first tube body 50 and the second tube body 54 from the outer surface 35 is set to fall within the protrusion height of the protection wall portions 40 of the relay attachment portions 36. Hence, an amount of protrusion of the first tube body 50 and the second tube body 54 from the outer surface 35 does not exceed that of the existing relay attachment portions 36. Accordingly, the electric connection box 10 can be compact in a more sophisticated manner.

Further, because the first tube body 50 and the second tube body 54 are provided so as to protrude from the bottom plate 32 of the lower case 14, it becomes possible to provide the first positioning boss 84 and the second positioning boss 88 of the upper case 12 to be inserted into the first tube body 50 and the second tube body 54, respectively, with a protrusion height dimension from the circumferential wall 66 of the upper case 12 larger than a protrusion height dimension of the connection terminals 22a. More specifically, in a case where the first tube body 50 and the second tube body 54 are provided not to protrude from the bottom plate 32 of the lower case 14, the first positioning boss 84 and the second positioning boss 88 to be inserted into the first tube body 50 and the second tube body 54, respectively, are not allowed to protrude beyond the bottom plate 32. It therefore becomes difficult to provide the first positioning boss 84 and the second positioning boss 88 with an amount of protrusion larger than that of the connection terminals 22a protruding from the bottom plate 32. In contrast, according to the embodiment, because the first tube body 50 and the second tube body 54 are provided so as to protrude from the bottom plate 32, the first positioning boss 84 and the second positioning boss 88 of the upper case 12 are allowed to protrude toward the lower case 14 with a protrusion height dimension larger than that of the connection terminals 22a. Consequently, when the lower case 14 is fit to the upper case 12, the lower case 14 is positioned with respect to the upper case 12 by fitting the first positioning boss 84 and the second positioning boss 88 into the first positioning recess 45 and the second positioning recess 48, respectively, before the connection terminals 22a are inserted into the terminal insertion holes 38 of the lower case 14. It thus becomes possible to position the connection terminals 22a with respect to the terminal insertion holes 38 and then insert the former into the latter. The operator therefore becomes able to perform an assembling work more easily in a reliable manner.

While the embodiment of the invention has been described in detail, it should be appreciated that the invention is not limited to the specific description above. For example, specific sectional shapes of the positioning recesses and the positioning bosses are not limited to a circular shape including an elliptical shape and an oval shape, and a rectangular shape, a polygonal shape, and other various shapes can be also suitably adopted as the sectional shape. In addition, the numbers of the positioning recesses and the positioning bosses are not limited, either, and three or more positioning recesses and positioning bosses may be provided.

Summarizing insofar, in order to provide an electric connection box of a novel structure facilitating a work to position a positioning boss provided to one case with respect to a positioning recess provided to the other case while achieving a more compact size, one case and an other case are positioned with respect to each other by fitting positioning bosses provided to the one case, respectively, into positioning recesses provided to the other case. Also, tube bodies defining the positioning recesses, respectively, are provided so as to protrude on an outer surface of the other case.

### [Description of major or important Reference Numerals and Signs]

10: electrical connection box,
12: upper case (one case)
14: lower case (the other case)
16: bus bar circuit (internal circuit body)
22a through 22c: connection terminals
32: bottom plate
34: circumferential wall (the other case)
35: outer surface
38: terminal insertion hole
44 and 82: first corner portions
45: first positioning recess
46 and 86: second corner portions
48: second positioning recess
50: first tube body
52: inner protrusion
54: second tube body
60: fitting recess groove
66: circumferential wall (one case)
84: first positioning boss
88: second positioning boss
90a through 90d: rattling preventing ribs
94a and 94b: rib protrusions
96a and 96b: rattling preventing ribs
100: tip end portion
102: hollow case

## Claims

1. An electric connection box in which an internal circuit body (16) is housed within a hollow case formed by fitting one case (12) and an other case (14) together and the one case is positioned with respect to the other case by means of at least one positioning boss (84, 88) provided to an interior of the one case which is fitted into a positioning recess ((45, 48) provided to an interior of the other case so that at least one connection terminal (22) provided to the internal circuit body is inserted into a corresponding at least one terminal insertion hole (38) provided so as to penetrate through the hollow case, the electric connection box being **characterized in that**:
a tube body (50, 54) defining the positioning recess (45, 48) is provided so as to protrude on an outer surface of the other case (14).

2. The electric connection box according to claim 1, wherein:
the positioning boss (84, 88) and the positioning recess (45, 48) are provided in two places spaced apart from each other; and
an outer shape of the tube body (50) defining the positioning recess in one place and an outer shape of the tube body (54) defining the positioning recess in the other place are different from each other.

3. The electric connection box according to claim 1 or 2, wherein:
the one case (12) and the other case (14) are fit together by inserting a circumferential wall (34) of the other case on an outer peripheral side of a circumferential wall (66) of the one case so as to overlap each other;
the internal circuit body (16) is housed in the interior of the one case; and
the positioning boss protrudes from a tip end portion of the circumferential wall (66) of the one case toward the other case (14) with a protrusion height higher than a protrusion height of the connection terminal (22).

## Patentansprüche

1. Ein elektrischer Anschlusskasten, bei dem ein interner Schaltkreiskörper (16) innerhalb eines hohlen Gehäuses aufgenommen ist, welches gebildet ist durch Zusammenfügen eines Gehäuses (12) und eines anderen Gehäuses (14), wobei das eine Gehäuse bezüglich des anderen Gehäuses mittels wenigstens eines Positionierstifts (84, 88) positioniert ist, der im Inneren des einen Gehäuses angeordnet ist und in eine Positioniervertiefung (45, 48) im Inneren des anderen Gehäuses eingesetzt wird, sodass wenigstens ein Verbindungsanschluss (22), der an dem internen Schaltkreiskörper angeordnet ist, in eine entsprechende wenigstens eine Anschlusseinführöffnung (38) eingeführt wird, welche so angeordnet ist, dass sie das hohle Gehäuse durchtritt, wobei der elektrische Anschlusskasten **dadurch gekennzeichnet ist, dass**:
ein Rohrkörper (50, 54), der die Positioniervertiefung (45, 48) definiert, so angeordnet ist, dass er zu einer Außenfläche des anderen Gehäuses (14) vorsteht.

2. Der elektrische Anschlusskasten nach Anspruch 1, wobei:
der Positionierstift (84, 88) und die Positioniervertiefung (45, 48) an zwei voneinander beabstandeten Orten angeordnet sind; und
eine Außenform des Rohrkörpers (50), der die Positioniervertiefung an der einen Stelle definiert und eine Außenform des Rohrkörpers (54), der die Positioniervertiefung an der anderen Stelle definiert, unterschiedlich zueinander sind.

3. Der elektrische Anschlusskasten nach Anspruch 1 oder 2, wobei:
das eine Gehäuse (12) und das andere Gehäuse (14) zusammengefügt werden, indem eine Umfangswand (34) des anderen Gehäuses auf eine äußere Umfangsseite einer Umfangswand (66) des anderen Gehäuses in einer überlappenden Weise gesetzt wird;
der interne Schaltkreiskörper (16) im Inneren des einen Gehäuses aufgenommen ist; und
der Positionierstift von einem Spitzenendabschnitt der Umfangswand (66) des einen Gehäuses in Richtung des anderen Gehäuses (14) mit einer Vorstehhöhe vorsteht, welche höher als eine Vorstehhöhe des Verbindungsanschlusses (22) ist.

## Revendications

1. Boîtier de jonction électrique dans lequel un corps de circuit interne (16) est contenu à l'intérieur d'un compartiment creux formé par assemblage d'un premier compartiment (12) et d'un autre compartiment (14) entre eux, et le premier compartiment est positionné par rapport à l'autre compartiment au moyen d'au moins un bossage de positionnement (84, 88) agencé sur une partie interne du premier compartiment, qui est assemblé dans une cavité de positionnement (45, 48) agencée sur une partie interne de l'autre compartiment de telle sorte qu'au moins une borne de liaison (22) agencée sur le corps de circuit interne est insérée dans au moins un orifice d'insertion de borne (38) correspondant, formé de manière à pénétrer à travers le compartiment creux, le boîtier de jonction électrique étant **caractérisé en ce que** :
un corps tubulaire (50, 54) définissant la cavité de positionnement (45, 48) est agencé de manière à venir en saillie sur une surface externe de l'autre compartiment (14).

2. Boîtier de jonction électrique selon la revendication 1, dans lequel :
le bossage de positionnement (84, 88) et la cavité de positionnement (45, 48) sont agencés à deux emplacements espacés l'un de l'autre ; et
une forme externe du corps tubulaire (50) définissant la cavité de positionnement à un premier emplacement et une forme externe du corps tubulaire (54) définissant la cavité de positionnement dans l'autre emplacement sont différents l'un de l'autre.

3. Boîtier de jonction électrique selon la revendication 1 ou 2, dans lequel :
le premier compartiment (12) et l'autre compartiment (14) sont assemblés en insérant une paroi circonférentielle (34) de l'autre compartiment sur un côté périphérique externe d'une paroi circonférentielle (66) du premier compartiment de manière à assurer un recouvrement de l'un par l'autre ;
le corps de circuit interne (16) est contenu dans la partie interne du premier compartiment ; et
le bossage de positionnement s'étend à partir d'une partie d'extrémité de pointe de la paroi circonférentielle (66) du premier compartiment vers l'autre compartiment (14), une hauteur de saillie étant supérieure à une hauteur de saillie de la borne de liaison (22).
